# FASCICULE DE BREVET EUROPEEN

(11) **EP 3 238 378 B1**
(45) Date de publication et mention de la délivrance du brevet: **22.04.2020**
(21) Numéro de dépôt: 15832813.8
(22) Date de dépôt: 21.12.2015
(51) Int. Cl.: H04L 12/24

(54) **SYSTÈME DE GÉNÉRATION D'UNE FONCTION RÉSEAU VIRTUALISÉE**
SYSTEM ZUR ERZEUGUNG EINER VIRTUALISIERTEN NETZWERKFUNKTION
SYSTEM FOR GENERATING A VIRTUALISED NETWORK FUNCTION

(30) Priorité: 23.12.2014 FR 1463260
(43) Date de publication de la demande: 01.11.2017
(73) Titulaire: Orange, 75015 Paris (FR)
(72) Inventeur: CHAWKI, Jamil, 22300 Lannion (FR); ROBERT, René, 22300 Rospez (FR)
(86) Numéro de dépôt international: PCT/FR2015/053695
(87) Numéro de publication internationale: WO 2016/102871

(56) Documents cités:
- US-A1- 2014 201 374
- US-A1- 2014 317 261
- Etsi: "ETSI GS NFV 002, V1.1.1; Network Functions Virtualisation (NFV); Architectural Framework", , 10 octobre 2013 (2013-10-10), pages 1-21, XP055205312, 650, route des Lucioles ; F-06921 Sophia-Antipolis ; France Extrait de l'Internet: URL:http://www.etsi.org/deliver/etsi_gs/nf v/001_099/002/01.01.01_60/gs_nfv002v010101 p.pdf [extrait le 2015-07-29]
- Etsi: "Network Functions Virtualisation (NFV); Virtualisation Requirements", , 10 octobre 2013 (2013-10-10), pages 2013-10, XP055148569, Extrait de l'Internet: URL:http://www.etsi.org/deliver/etsi_gs\NF V\001_099\004\01.01.01_60\gs_NFV004v010101 p.pdf [extrait le 2014-10-23]
- "Network Functions Virtualisation (NFV); Management and Orchestration", GROUP SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. NFV MAN, no. V1.1.1, 1 December 2014 (2014-12-01), XP014235740,

## Description

L'invention se situe dans le domaine des réseaux de télécommunication, et concerne plus particulièrement un système de génération d'une fonction réseau virtualisée pour un réseau de communication virtualisé.

L'organisme de normalisation ETSI (pour « European Télécommunications Standards Institute ») a lancé début 2013 un projet dénommé NFV (pour «Network Functions Virtualization ») pour établir, entre les experts des secteurs des télécommunications et des technologies de l'information, les premières spécifications dans le domaine de la virtualisation (c'est-à-dire à la dématérialisation) des fonctions utilisées dans les réseaux de télécommunications, désignées par la suite par fonctions réseaux. Ces fonctions réseaux désignent par exemple les fonctions mises en œuvre par un cœur de réseau, une passerelle, un pare-feu, etc. Une fonction réseau virtualisée se définit plus particulièrement à partir de composants élémentaires correspondant par exemple à des modules logiciels mettant en œuvre une fonction élémentaire de cette fonction réseau virtualisée. La virtualisation de ces fonctions est réalisée notamment par des systèmes informatiques dits en nuage, aussi plus communément désignés par « cloud », qui implémentent et hébergent ces fonctions sur des machines virtuelles accessibles par exemple par l'intermédiaire d'une application réseau. Ces machines virtuelles utilisent des ressources informatiques et réseaux matérielles distantes (ex. connectivité réseau, puissance de calcul, espaces de stockage, serveurs, applications, etc.), gérées par le système informatique en nuage, et mutualisées entre ses différents clients en fonction de leurs besoins respectifs. Les clients peuvent ainsi accéder de manière évolutive à ces ressources, sans avoir à administrer l'infrastructure sous-jacente de gestion de ces ressources qui est souvent complexe.

Le document US 2014/0201374 A1, publié le 17 Juillet 2014, décrit un dispositif permettant de virtualiser un équipement réseau et de diviser conformément à une instruction de virtualisation reçue, l'équipement réseau en une pluralité de fonctions réseau. Le document US 2014/0317261 A1, publié le 23 Octobre 2014, décrit une méthode comprenant d'une part l'identification de fonctions réseau virtualisées pour la mise en ouvre d'un service réseau virtualisé et d'autre part la création d'un indicateur d'interdépendance pour chacune des fonction réseau virtualisées en vue de l'exécution coordonnée di service réseau. Le document de spécifications GS NFV MAN 001 V1.1.1 de l'ETSI publié le 1 décembre 2014, décrit un cadre d'administration et d'orchestration pour la fourniture de fonctions réseau virtualisées VNF et les opérations qui sont liées telles que la configuration des fonctions réseau virtualisées et de l'infrastructure sur laquelle ces fonctions s'exécutent.

Le document de spécifications GS NFV 001 v.1.1.1 de l'ETSI, publié en octobre 2013, intitulé « Network Functions Virtualization (NFV) ; Use Cases », présente plusieurs cas d'usage de la virtualisation de fonctions réseaux. Ce document décrit de manière très générale la virtualisation de fonctions réseaux dans différents contextes (virtualisation d'un réseau mobile, d'une station de base, d'un réseau de distribution de contenus, etc.). Les architectures de réseaux virtualisés ainsi décrites souffrent néanmoins de certains inconvénients. Les services clients d'une infrastructure de réseau virtualisée sont notamment limités par le nombre de fonctions réseaux virtualisées mises à leur disposition par l'infrastructure de réseau. Les fonctions réseaux mises en œuvre sont en particulier figées sans qu'il soit possible d'intervenir sur leurs composants élémentaires. En outre, proposer un large choix de fonctions réseaux virtualisées n'est permis qu'au prix d'une augmentation du catalogue de fonctions réseaux virtualisées fourni par l'infrastructure de réseau virtualisée dans laquelle elles sont mises en œuvre. Ceci se traduit notamment par une complexification du catalogue, accompagnée d'un risque accru de sélection d'une fonction réseau virtualisée inadaptée au service demandé par un client.

Un des buts de l'invention est de remédier à des insuffisances/inconvénients de l'état de la technique et/ou d'y apporter des améliorations.

Selon un premier aspect, l'invention concerne un dispositif de configuration d'une fonction réseau virtualisée, destinée à être mise en œuvre dans un réseau de communication virtualisée tel que défini dans la revendication indépendante 1.

Le dispositif de configuration permet, sur requête d'une entité requérante, de définir des fonctions réseaux virtualisées à partir de composants élémentaires (appelés VNFC pour « Virtual Networking Function Component » en anglais) correspondant par exemple à des modules logiciels mettant en œuvre une fonction élémentaire d'une fonction réseau virtualisée. Une telle fonction réseau virtualisée est par exemple une fonction « routeur », et deux composants élémentaires de cette fonction réseau virtualisée sont par exemple un module de prise en charge du protocole IPv6 (pour « Internet Protocol version 6 ») et un module de prise en charge du protocole BGP (pour « Border Gateway Protocol »).

Le dispositif permet de combiner avantageusement des composants élémentaires à une fonction réseau de base afin de réaliser une fonction réseau virtualisée répondant à des exigences particulières d'une entité cliente d'une infrastructure de réseau virtualisée où cette fonction sera mise en œuvre.

Grâce au dispositif il est ainsi possible de configurer des fonctions réseaux virtualisées selon des critères personnalisés avec une grande flexibilité. Les composants élémentaires peuvent aisément être mis en œuvre par exemple par une ou plusieurs machines virtuelles créées à cet effet au sein d'une infrastructure de réseau virtualisée, en fonction des paramètres de mise en œuvre associés à ce composant.

Un tel dispositif de configuration d'une fonction réseau virtualisée permet en outre de s'affranchir de la nécessité de disposer d'un catalogue pléthorique de fonctions réseaux virtualisées mises à disposition par une infrastructure de réseau virtualisée, auprès par exemple d'entités clientes de cette infrastructure de réseau. Une fonction réseau virtualisée non présente dans un tel catalogue peut en effet avantageusement être configurée par le dispositif de configuration à partir de la fonction réseau de base et de composants élémentaires d'une telle fonction. Il en résulte en outre une économie des ressources de stockages associées à un tel catalogue, les fonctions réseaux virtualisées pouvant en effet être obtenues par composition de la fonction réseau de base et de composants élémentaires. La sélection d'une fonction réseau virtualisée au sein du catalogue s'en trouve ainsi facilitée. De même un parcours simplifié du catalogue est également possible. Un tel dispositif permet ainsi de simplifier l'offre de services clients disponible via l'infrastructure de réseau virtualisée.

En outre le dispositif de configuration permet également une maintenance facilitée des fonctions réseaux virtualisées, ces dernières pouvant par exemple facilement être reconfigurées lorsqu'un composant élémentaire d'une fonction réseau virtualisée est mis à jour, sans qu'il soit nécessaire de remplacer la fonction réseau virtualisée dans son ensemble. Une telle mise à jour peut par exemple résulter d'une amélioration ou d'une correction d'un composant élémentaire.

Selon une caractéristique particulière, la requête de configuration comprend une liste de composants élémentaires pour ladite fonction réseau virtualisée.

Les composants élémentaires requis par exemple par une entité tierce pour la fonction réseau virtualisée étant directement fournis dans la requête de fourniture, la configuration de la fonction réseau virtualisée par le dispositif de configuration est accélérée.

Selon une caractéristique particulière, le dispositif de configuration comprend en outre un module de contrôle d'une compatibilité d'un premier composant élémentaire avec au moins un deuxième composant élémentaire pour composer la fonction réseau virtualisée, le module de configuration étant activé uniquement lorsque les premier et deuxième composants élémentaires sont vérifiés compatibles entre eux.

Le contrôle d'une compatibilité entre composants élémentaires d'une fonction réseau virtualisée permet d'obtenir une configuration valide pour la fonction réseau virtualisée à configurer. Il est ainsi possible de restreindre le choix des composants élémentaires pour une fonction réseau virtualisée aux seuls composants qui combinés entre eux permettent de réaliser la fonction réseau virtualisée. Ce contrôle permet en outre de garantir un niveau de performance élevé de la fonction réseau virtualisée, et d'éviter une utilisation détournée de composants élémentaires par une fonction réseau virtualisée particulière.

Selon une caractéristique particulière, le dispositif de configuration comprend en outre un module d'envoi/réception, agencé pour envoyer à un dispositif de génération une commande de génération de la fonction réseau virtualisée, à partir de la fonction réseau virtualisée composée, dans un format exécutable dans le réseau de communication virtualisé.

L'envoi d'une commande de génération permet de commander à un dispositif de générer la fonction réseau virtualisée résultant de la configuration de cette fonction à partir de composants élémentaires. La configuration d'une fonction réseau virtualisée et sa génération sont ainsi découplées, ce qui permet une gestion facilitée de ces deux fonctions.

En outre la génération de la fonction réseau virtualisée est demandée dans un format exécutable dans un réseau de communication virtualisé particulier. La fonction réseau virtualisée peut ainsi être adaptée à des contraintes particulières à ce réseau de communication virtualisé. La génération de la fonction réseau virtualisée peut notamment prendre en compte des contraintes de performances, d'usages, ou encore de niveaux de qualité souhaités relatifs à ce réseau de communication virtualisé.

La génération de la fonction réseau virtualisée sous une forme exécutable permet en outre une réutilisation de cette fonction au sein du réseau de communication virtualisé sans en refaire la configuration. La fonction sous sa forme exécutable peut notamment être mémorisée afin d'alimenter un catalogue de fonctions réseaux virtualisées personnalisées, répondant à des exigences particulières d'une entité cliente de l'infrastructure de réseau virtualisée pour laquelle la fonction a été générée.

Selon une caractéristique particulière, le dispositif de configuration comprend en outre une base de données locale, agencée pour mémoriser une fonction réseau virtualisée générée par le dispositif de génération.

Selon un deuxième aspect, l'invention concerne un système de génération d'une fonction réseau virtualisée tel que défini dans la revendication 6.

Selon une caractéristique particulière, le système de génération comprend en outre un dispositif de génération d'une fonction réseau virtualisée, le dispositif de génération comprenant :
- un module d'obtention, agencé pour obtenir un modèle de données d'au moins un composant élémentaire d'une fonction réseau virtualisée depuis la base de données ;
- un module d'envoi/réception, agencé pour recevoir une commande de génération de la fonction réseau virtualisée, à partir d'une fonction réseau virtualisée composée dans un format exécutable dans un réseau de communication virtualisé, et pour envoyer, au dispositif de configuration, la fonction réseau virtualisée générée ;
- un module de calcul, agencé pour générer ladite fonction réseau virtualisée dans un format exécutable dans un réseau de communication virtualisé, à partir d'au moins un modèle de données d'au moins un composant élémentaire de la fonction réseau virtualisée.

Les avantages énoncés pour l'une quelconque des caractéristiques du dispositif de configuration d'une fonction réseau virtualisée selon le premier aspect sont directement transposables au système de génération d'une fonction réseau virtualisée selon le deuxième aspect.

Selon un troisième aspect, l'invention concerne un procédé de configuration d'une fonction réseau virtualisée, destinée à être mise en œuvre dans un réseau de communication virtualisé tel que défini dans la revendication indépendante 8.

Selon une caractéristique particulière, la requête de configuration comprend une liste de composants élémentaires pour la fonction réseau virtualisée.

Selon une caractéristique particulière, le procédé de configuration comprend en outre un contrôle d'une compatibilité d'un premier composant élémentaire avec au moins un deuxième composant élémentaire pour composer la fonction réseau virtualisée, la composition étant mise en œuvre uniquement lorsque les premier et deuxième composants élémentaires sont vérifiés compatibles entre eux.

Selon un quatrième aspect, l'invention concerne également un programme pour un dispositif de configuration, comprenant des instructions de code de programme destinées à commander l'exécution des étapes du procédé précédemment décrit, lorsque ledit programme est exécuté par ledit dispositif et un support d'enregistrement lisible par un dispositif de configuration sur lequel est enregistré un programme pour un dispositif de configuration.

L'invention sera mieux comprise à l'aide de la description suivante de modes de réalisation particuliers, en référence aux dessins annexés sur lesquels :
- la figure 1 représente dans son environnement un système de génération d'une fonction réseau virtualisée selon un mode particulier de réalisation ;
- la figure 2 représente un dispositif de configuration d'une fonction réseau virtualisée selon un mode particulier de réalisation ;
- la figure 3 représente un dispositif de génération d'une fonction réseau virtualisée selon un mode particulier de réalisation.

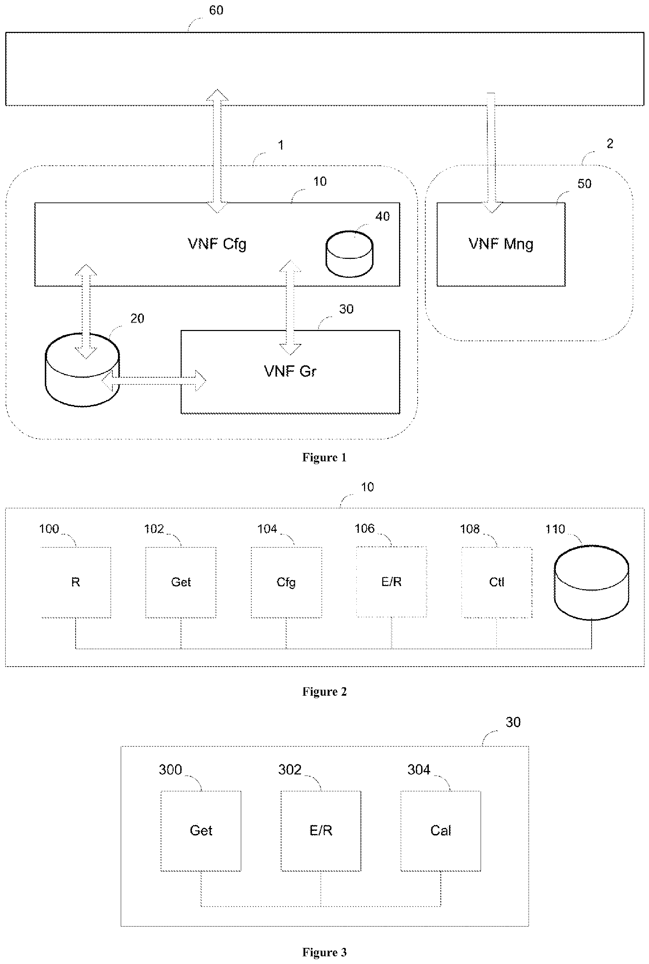

La **figure 1** représente un système 1 de génération d'une fonction réseau virtualisée dans son environnement selon un mode particulier de réalisation. Le système 1 comprend notamment un dispositif de configuration d'une fonction réseau virtualisée 10, un dispositif de génération d'une fonction réseau virtualisée 30 et une base de données 20 agencée pour mémoriser des composants élémentaires d'une fonction réseau virtualisée et des paramètres de mise en œuvre associés à ces composants élémentaires. La base de données 20 définit ainsi un catalogue de composants élémentaires et de fonctions réseaux virtualisées. Les paramètres sont par exemple des descripteurs de fonctions réseaux virtualisées (en anglais « VNF descriptor » pour « Virtual Network Function descriptor ») tels que définis par l'ETSI. Ils ont notamment pour objet de préciser le comportement opérationnel des fonctions réseaux virtualisées ainsi que les ressources nécessaires afin de les déployer (e.g. nombre de machines virtuelles, mémoire, bande passante, latence).

Le système 1 permet de configurer et générer une fonction réseau virtualisée à partir de composants élémentaires, mémorisés dans la base de données 20, et sélectionnés pour composer cette fonction réseau virtualisée. Cette fonction réseau virtualisée est par ailleurs destinée à être mise en œuvre dans un réseau de communication virtualisé 2. La configuration et la génération de la fonction réseau virtualisée sont plus précisément réalisées sur requête d'une entité requérante 60 avec laquelle communique le système 1. L'entité requérante 60 est par exemple un portail proposant une interface homme-machine à un utilisateur. La communication entre le système 1 et l'entité requérante 60 est par exemple réalisée par l'intermédiaire du protocole de communication http (pour « Hypertext Transfer Protocol »). Une fois générée par le système 1, une fonction réseau virtualisée est mémorisée dans une base de données 40 du système 1 de génération. Le système 1 permet ensuite de transmettre la fonction réseau virtualisée par l'intermédiaire de l'entité requérante 60 à un dispositif de gestion de ressources virtualisées 50 (en anglais « VNF Manager » pour « Virtual Network Function Manager »), pour sa mise en œuvre dans le réseau de communication virtualisé 2.

La configuration et la génération d'une fonction réseau virtualisée par le système 1 vont maintenant être décrites. Pour cela on considère, à titre d'exemple, une fonction réseau virtualisée VNF1 désignant une fonction de routage destinée à être mise en œuvre dans un réseau de communication par un routeur.

Dans un mode de réalisation particulier, l'entité requérante 60 envoie une requête de fourniture d'une fonction réseau virtualisée au dispositif de configuration 10 indiquant qu'elle demande la fourniture de la fonction VNF1 pour une mise en œuvre de cette fonction dans le réseau de communication virtualisé 2.

En réponse à cette requête, le dispositif de configuration 10 interroge la base de données 20 afin d'obtenir une liste de composants élémentaires pour la fonction VNF1, puis transmet cette liste à l'entité requérante 60. Cette liste comprend à titre d'exemple les composants élémentaires C1, C2, C3 et C4 suivants : un module C1 de prise en charge du protocole IPv4 (pour « Internet Protocol version 4 »), un module C2 de prise en charge du protocole IPv6, un module C3 de prise en charge du protocole MPLS (pour « Multiprotocol Label Switching »), un module C4 de prise en charge du protocole BGP, ainsi qu'une fonction réseau virtualisée VNF2 de base associée par défaut à une fonction de routage. Les différents composants élémentaires correspondent pour cet exemple à des modules de prise en charge de protocoles alternatifs et/ou complémentaires à ceux prévus dans la fonction réseau virtualisée par défaut.

L'entité requérante 60 vérifie que la fonction réseau virtualisée VNF2 associée à une fonction de routage correspond aux exigences techniques souhaitées pour la fonction VNF1 demandée. A titre d'exemple on suppose dans ce mode de réalisation que l'entité requérante 60 demande une fonction réseau virtualisée VNF1 prenant en charge les protocoles IPv6 et BGP, alors que ces deux protocoles ne sont pas pris en charge par la fonction réseau virtualisée VNF2. La fonction réseau virtualisée VNF2 ne correspondant pas aux exigences techniques souhaitées pour la fonction réseau virtualisée VNF1, l'entité requérante 60 sélectionne les composants élémentaires C2 et C4 correspondants respectivement aux modules de prise en charge du protocole IPv6 et de prise en charge du protocole BGP, puis envoie une requête de configuration de la fonction réseau virtualisée VNF1 à partir de ces deux composants élémentaires au dispositif de configuration 10.

Le dispositif de configuration 10 reçoit cette requête de configuration, puis interroge la base de données 20 afin d'obtenir les paramètres de mise en œuvre pour les composants élémentaires C2 et C4. Les paramètres de mise en œuvre indiquent les caractéristiques techniques nécessaires à la mise en œuvre du composant élémentaire considéré (e.g. capacité de calcul, quantité de mémoire, nombre de machine virtuelle, etc). Ces paramètres de mise en œuvre peuvent également dépendre d'une localisation géographique ou d'un réseau de communication virtualisé particulier où seront mis en œuvre les composants élémentaires. Dans le présent mode de réalisation, les paramètres de mise en œuvre concernent plus précisément une mise en œuvre dans le réseau de communication virtualisé 2. Les composants élémentaires et les paramètres de mise en œuvre associés sont à titre d'exemple décrits dans le langage TOSCA (pour « Topology and Orchestration Spécification for Cloud Applications ») défini par le consortium OASIS (pour « Organization for the Advancement of Structured Information Standards »).

Une fois les paramètres de mise en œuvre des composants élémentaires C2 et C4 obtenus par le dispositif de configuration 10, ce dernier dispose d'une description complète de chacun des composants C2 et C4 composant la fonction réseau virtualisée VNF1, pour une mise en œuvre de cette dernière dans le réseau de communication virtualisé 2. Le dispositif de configuration 10 envoie alors une requête de génération de la fonction réseau virtualisée VNF1 au dispositif de génération 30.

Le dispositif de génération 30 interroge ensuite la base de données 20 afin d'obtenir un modèle de données pour chaque composant élémentaire C2 et C4, ainsi qu'un modèle de données pour la fonction réseau virtualisée VNF2 associée par défaut à une fonction de routage. Ces modèles de données sont à titre d'exemple représentés à l'aide du langage de modèle de données YANG défini dans le document de l'IETF RFC 6020 « YANG - A Data Modeling Language for the Network Configuration Protocol (NETCONF) ». Le dispositif de génération 30 agrège alors les différents modèles obtenus en un unique modèle de données, représentant la fonction réseau virtualisée VNF1 composée des composants élémentaires C2, C4 et de la fonction réseau virtualisée VNF2. La fonction réseau virtualisée VNF1 résultante correspond à une fonction routeur prenant en charge les protocoles IPv6 et BGP.

Le dispositif de génération 30 génère, à partir du modèle de données de la fonction réseau virtualisée VNF1 et des paramètres de mise en œuvre des composants C2 et C4 de la fonction VNF1, la fonction réseau virtualisée VNF1 dans un format exécutable et permettant de la déployer (e.g. format OVF pour « Open Virtualization Format ») dans le réseau de communication virtualisé 2. Il est par ailleurs souligné que dans un mode de réalisation particulier, la génération de la fonction réseau virtualisée par le dispositif de génération 30 peut prendre en compte des contraintes de performances, d'usages, ou encore de niveaux de qualité souhaités relatifs à ce réseau de communication virtualisé. Le dispositif de génération 30 sera alors muni des interfaces de communication nécessaires à l'obtention des informations de contrainte auprès de dispositifs tiers.

Le dispositif de génération 30 envoie ensuite la fonction réseau virtualisée VNF1 générée sous sa forme exécutable au dispositif de configuration 10. Dans un mode de réalisation particulier, ce dernier mémorise la fonction VNF1 dans une base de données locale 40. La fonction VNF1 pourra ainsi être réutilisée par le dispositif de configuration 10 lors d'une prochaine demande pour une fonction réseau virtualisée équivalente à la fonction VNF1 sans nécessité de la générer à nouveau.

Enfin, le dispositif de configuration transmet la fonction réseau virtualisée VNF1 à l'entité requérante 60. Cette dernière la déploie dans le réseau de communication virtualisé 2 par l'intermédiaire d'un dispositif de gestion de ressources virtualisées 50.

Dans un autre mode de réalisation, le dispositif de configuration effectue en outre un contrôle d'une compatibilité entre le composant élémentaire C2 et le composant élémentaire C4, la configuration effective de la fonction réseau virtualisée VNF1 n'étant réalisée que si les composants élémentaires C2 et C4 sont vérifiés compatibles entre eux.

Dans un autre mode de réalisation, le dispositif de génération 30 transmet directement la fonction réseau virtualisée VNF1 au réseau de communication virtualisé 2.

Dans un autre mode de réalisation, l'entité requérante 60 obtient les composants élémentaires disponibles pour la fonction réseau virtualisée VNF1 en interrogeant directement la base de données 20 sans passer par le dispositif de configuration 10. Elle transmet alors directement les composants élémentaires sélectionnés pour la fonction réseau virtualisée VNF1 dans la requête de fourniture d'une fonction réseau virtualisée adressée au dispositif de configuration 10. Un contrôle de compatibilité entre composants élémentaires peut par ailleurs avantageusement être mis en œuvre par la base de données 20 avant transmission des composants élémentaires au dispositif de configuration 10. A titre d'exemple, si la fonction réseau virtualisée VNF1 correspond à un routeur avec une faible capacité de routage, la base de données 20 ne transmettra pas de composant élémentaire correspondant à un module de prise en charge du protocole MPLS. De même pour une fonction réseau virtualisée VNF1 correspondant à un routeur dont les caractéristiques sont destinées pour un usage à l'accès, la base de données 20 ne transmettra pas de composants élémentaires correspondant à un module de prise en charge du protocole BGP. Un tel filtrage des composants élémentaires par la base de données 20 peut également prendre en compte des politiques de fourniture des fonctions réseaux virtualisées par une entité tierce.

Le présent mode de réalisation a été décrit avec un nombre limité de composants élémentaires. Il n'existe cependant pas de limitations quant au nombre de composants élémentaires susceptibles de pouvoir être utilisés dans la composition d'une fonction réseau virtualisée. Par ailleurs, dans un autre mode de réalisation un composant élémentaire peut également désigner un module avec des caractéristiques techniques particulières plutôt qu'un module réalisant une fonction particulière (e.g. des composants élémentaires désignant des entités de gestion d'un plan de transfert ou d'un plan de contrôle d'une fonction routeur ayant différentes capacités par seconde de traitement de requêtes).

De même il n'existe pas de limitation quant au protocole de communication utilisé entre l'entité requérante 60 et le dispositif de configuration 10. L'interface de communication entre l'entité requérante 60 et le dispositif de configuration 10 peut aisément être adaptée à tout type de protocole de communication fonctionnant sur un modèle client-serveur.

Il est en outre souligné que le système 1 a été illustré précédemment pour une mise en œuvre d'une fonction réseau virtualisée représentant un routeur, mais qu'il n'existe aucune limitation quant au type de fonction réseau virtualisée pouvant être générée par le système 1. A titre d'exemple, le système 1 peut également être mis en œuvre pour générer une fonction réseau virtualisée représentant une passerelle P-GW (pour « Packet Data Network Gateway ») composée de composants élémentaires correspondant respectivement aux fonctions PCEF (pour « Policy and Charging Rules Function ») et TDF (« Traffic Détection Function ») tels que définis par l'organisme de normalisation 3GPP, ou encore un réseau de distribution de contenus (e.g. réseau CDN pour « Content Delivery Network »).

La **figure 2** représente un dispositif de configuration 10 d'une fonction réseau virtualisée selon un mode particulier de réalisation. Le dispositif de configuration 10 comprend :
- un module de réception 100, agencé pour recevoir une requête de configuration de la fonction réseau virtualisée ;
- un module d'obtention 102, agencé pour obtenir au moins un paramètre de mise en œuvre dans un réseau de communication virtualisé 2 d'un composant élémentaire de la fonction réseau virtualisée, à ajouter à une fonction réseau virtualisée de base ;
- un module de configuration 104, agencé pour composer ladite fonction réseau virtualisée à partir d'au moins un composant élémentaire et du paramètre de mise en œuvre du au moins un composant élémentaire obtenu.

Dans un autre mode de réalisation, la requête de configuration comprend une liste de composants élémentaires pour la fonction réseau virtualisée.

Dans un autre mode de réalisation, le dispositif de configuration 10 comprend également un module de contrôle 108 d'une compatibilité d'un premier composant élémentaire avec au moins un deuxième composant pour composer ladite fonction réseau virtualisée, le module de configuration 104 étant activé uniquement lorsque les premier et deuxième composant élémentaire sont vérifiés compatibles entre eux.

Dans un autre mode de réalisation, le dispositif de configuration 10 comprend en outre un module d'envoi/réception 106, agencé pour envoyer à un dispositif de génération 30 une commande de génération de la fonction réseau virtualisée, à partir de la fonction réseau virtualisée composée, dans un format exécutable dans le réseau de communication virtualisé 2.

Dans un autre mode de réalisation, le dispositif de configuration 10 comprend en outre une base de données locale 110, agencée pour mémoriser une fonction réseau virtualisée générée par un dispositif de génération 30 d'une fonction réseau virtualisée. Le module d'envoi/réception 106 est dans ce cas également agencé pour recevoir une fonction réseau virtualisée générée par un dispositif de génération 30.

La **figure 3** représente un dispositif de génération 30 d'une fonction réseau virtualisée selon un mode particulier de réalisation. Le dispositif de génération 30 comprend :
- un module d'obtention 300, agencé pour obtenir un modèle de données d'au moins un composant élémentaire d'une fonction réseau virtualisée ;
- un module d'envoi/réception 302, agencé pour recevoir une commande de génération de la fonction réseau virtualisée, à partir d'une fonction réseau virtualisée composée, dans un format exécutable dans un réseau de communication virtualisé 2, et pour envoyer, à un dispositif de configuration 10, la fonction réseau virtualisée générée ;
- un module de calcul 304, agencé pour générer la fonction réseau virtualisée dans un format exécutable dans un réseau de communication virtualisé 2, à partir d'au moins un modèle de données d'au moins un composant élémentaire de la fonction réseau virtualisée.

L'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 100, 102, 104, 106 et 108 sont agencés pour mettre en œuvre le procédé de configuration précédemment décrit. Il s'agit de préférence de modules logiciels comprenant des instructions logicielles pour faire exécuter celles des étapes du procédé de configuration précédemment décrit, mises en œuvre par un dispositif de configuration. L'invention concerne donc aussi :
- un programme pour un dispositif de configuration, comprenant des instructions de code de programme destinées à commander l'exécution des étapes du procédé de configuration précédemment décrit, lorsque ledit programme est exécuté par un dispositif de configuration ;
- un support d'enregistrement lisible par un dispositif de configuration sur lequel est enregistré le programme pour un dispositif de configuration.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Dispositif de configuration (10) d'une fonction réseau virtualisée, destinée à être mise en œuvre dans un réseau de communication virtualisé (2), ledit dispositif comprenant :
- un module de réception (100), agencé pour recevoir une requête de configuration de ladite fonction réseau virtualisée ;
- un module d'obtention (102), agencé pour obtenir au moins un paramètre de mise en œuvre dans un réseau de communication virtualisé (2) d'un composant élémentaire de ladite fonction réseau virtualisée, le composant élémentaire étant à ajouter à une fonction réseau virtualisée de base;
- un module de configuration (104), agencé pour composer ladite fonction réseau virtualisée à partir de la fonction réseau virtualisée de base et de l'au moins un composant élémentaire mis en œuvre à partir de l'au moins un paramètre obtenu.

2. Dispositif de configuration selon la revendication 1, dans lequel la requête de configuration comprend une liste de composants élémentaires pour ladite fonction réseau virtualisée.

3. Dispositif selon la revendication 1, comprenant en outre un module de contrôle (108) d'une compatibilité d'un premier composant élémentaire avec au moins un deuxième composant élémentaire pour composer ladite fonction réseau virtualisée, ledit module de configuration étant activé uniquement lorsque les premier et deuxième composants élémentaires sont vérifiés compatibles entre eux.

4. Dispositif selon la revendication 1, comprenant en outre un module d'envoi/réception (106), agencé pour envoyer à un dispositif de génération une commande de génération de ladite fonction réseau virtualisée à partir de la fonction réseau virtualisée composée dans un format exécutable dans ledit réseau de communication virtualisé.

5. Dispositif selon la revendication 4, comprenant en outre une base de données locale (110), agencée pour mémoriser une fonction réseau virtualisée générée par le dispositif de génération (30).

6. Système de génération (1) d'une fonction réseau virtualisée, comprenant :
- une base de données (20), agencée pour mémoriser des paramètres de mise en œuvre associés à des composants élémentaires de fonctions réseaux virtualisées, lesdits paramètres étant relatifs à une mise en œuvre desdits composants dans au moins un réseau de communication virtualisé (2) ;
- un dispositif de configuration (10) d'une fonction réseau virtualisée selon les revendications 1 à 5, dans lequel ledit module d'obtention (102) est agencé pour obtenir ledit au moins un paramètre de mise en œuvre depuis ladite base de données.

7. Système selon la revendication 6, comprenant en outre un dispositif de génération (30) d'une fonction réseau virtualisée, ledit dispositif de génération comprenant :
- un module d'obtention (300), agencé pour obtenir un modèle de données d'au moins un composant élémentaire d'une fonction réseau virtualisée depuis ladite base de données ;
- un module d'envoi/réception (302), agencé pour recevoir une commande de génération de ladite fonction réseau virtualisée, à partir d'une fonction réseau virtualisée composée, dans un format exécutable dans un réseau de communication virtualisé (2), et pour envoyer, audit dispositif de configuration, ladite fonction réseau virtualisée générée ;
- un module de calcul (304), agencé pour générer ladite fonction réseau virtualisée dans un format exécutable dans un réseau de communication virtualisé (2), à partir d'au moins un modèle de données d'au moins un composant élémentaire de ladite fonction réseau virtualisée.

8. Procédé de configuration d'une fonction réseau virtualisée, destinée à être mise en œuvre dans un réseau de communication virtualisé (2), ledit procédé comprenant :
- une réception d'une requête de configuration de ladite fonction réseau virtualisée ;
- une obtention d'au moins un paramètre de mise en œuvre dans un réseau de communication virtualisé (2) d'un composant élémentaire de ladite fonction réseau virtualisée, le composant élémentaire étant à ajouter à une fonction réseau virtualisée de base;
- une composition de ladite fonction réseau virtualisée à partir de la fonction réseau virtualisée de base et de l'au moins un composant élémentaire mis en œuvre à partir de l'au moins un paramètre obtenu.

9. Procédé selon la revendication 8, dans lequel la requête de configuration comprend une liste de composants élémentaires pour ladite fonction réseau virtualisée.

10. Procédé selon la revendication 8, comprenant en outre un contrôle d'une compatibilité d'un premier composant élémentaire avec au moins un deuxième composant élémentaire pour composer ladite fonction réseau virtualisée, la composition étant mise en œuvre uniquement lorsque les premier et deuxième composants élémentaires sont vérifiés compatibles entre eux.

11. Programme pour un dispositif de configuration, comprenant des instructions de code de programme destinées à commander l'exécution des étapes du procédé selon l'une des revendications 8 à 10, lorsque ledit programme est exécuté par un dispositif de configuration.

12. Support d'enregistrement lisible par un dispositif de configuration sur lequel est enregistré le programme selon la revendication 11.

## Patentansprüche

1. Vorrichtung zur Konfiguration (10) einer virtualisierten Netzwerkfunktion, die dazu bestimmt ist, in einem virtualisierten Kommunikationsnetzwerk (2) umgesetzt zu sein, die Vorrichtung umfassend:
- ein Empfangsmodul (100), das angeordnet ist, eine Anfrage zur Konfiguration der virtualisierten Netzwerkfunktion zu empfangen;
- ein Bezugsmodul (102), das angeordnet ist, mindestens einen Parameter zur Umsetzung einer Elementarkomponente der virtualisierten Netzwerkfunktion in einem virtualisierten Kommunikationsnetzwerk (2) zu beziehen, wobei die Elementarkomponente einer virtualisierten Basisnetzwerkfunktion hinzuzufügen ist;
- ein Konfigurationsmodul (104), das angeordnet ist, die virtualisierte Netzwerkfunktion ausgehend von der virtualisierten Basisnetzwerkfunktion und der mindestens einen Elementarkomponente, die ausgehend von dem mindestens einen bezogenen Parameter umgesetzt wird, zu bilden.

2. Konfigurationsvorrichtung nach Anspruch 1, wobei die Konfigurationsanfrage eine Liste von Elementarkomponenten für die virtualisierte Netzwerkfunktion umfasst.

3. Vorrichtung nach Anspruch 1, ferner umfassend ein Modul zur Steuerung (108) einer Kompatibilität einer ersten Elementarkomponente mit mindestens einer zweiten Elementarkomponente, um die virtualisierte Netzwerkfunktion zu bilden, wobei das Konfigurationsmodul nur dann aktiviert wird, wenn überprüft ist, dass die erste und zweite Elementarkomponente miteinander kompatibel sind.

4. Vorrichtung nach Anspruch 1, ferner umfassend eine Sendeempfangsmodul (106), das angeordnet ist, an eine Erzeugungsvorrichtung einen Befehl zur Erzeugung der virtualisierten Netzwerkfunktion ausgehend von der gebildeten virtualisierten Netzwerkfunktion in einem Format zu senden, das in dem virtualisierten Kommunikationsnetzwerk ausführbar ist.

5. Vorrichtung nach Anspruch 4, ferner umfassend eine lokale Datenbank (110), die angeordnet ist, eine virtualisierte Netzwerkfunktion zu speichern, die durch die Erzeugungsvorrichtung (30) erzeugt wurde.

6. System zur Erzeugung (1) einer virtualisierten Netzwerkfunktion, umfassend:
- eine Datenbank (20), die angeordnet ist, Umsetzungsparameter zu speichern, die Elementarkomponenten von virtualisierten Netzwerkfunktionen zugeordnet sind, wobei die Parameter eine Umsetzung der Komponenten in mindestens einem virtualisierten Kommunikationsnetzwerk (2) betreffen;
- Vorrichtung zur Konfiguration (10) einer virtualisierten Netzwerkfunktion nach den Ansprüchen 1 bis 5, wobei das Bezugsmodul (102) angeordnet ist, den mindestens einen Umsetzungsparameter von der Datenbank zu beziehen.

7. System nach Anspruch 6, ferner umfassend eine Vorrichtung zur Erzeugung (30) einer virtualisierten Netzwerkfunktion, die Erzeugungsvorrichtung umfassend:
- ein Bezugsmodul (300), das angeordnet ist, ein Datenmodell mindestens einer Elementarkomponente einer virtualisierten Netzwerkfunktion von der Datenbank zu beziehen;
- ein Sendeempfangsmodul (302), das angeordnet ist, einen Befehl zur Erzeugung der virtualisierten Netzwerkfunktion ausgehend von einer gebildeten virtualisierten Netzwerkfunktion, in einem Format zu empfangen, das in einem virtualisierten Kommunikationsnetzwerk (2) ausführbar ist, und die erzeugte virtualisierte Netzwerkfunktion an die Konfigurationsvorrichtung zu senden;
- Rechenmodul (304), das angeordnet ist, die virtualisierte Netzwerkfunktion in einem Format, das in dem virtualisierten Kommunikationsnetzwerk (2) ausführbar ist, ausgehend von mindestens einem Datenmodell mindestens einer Elementarkomponente der virtualisierten Netzwerkfunktion zu erzeugen.

8. Verfahren zur Konfiguration einer virtualisierten Netzwerkfunktion, die dazu bestimmt ist, in einem virtualisierten Kommunikationsnetzwerk (2) umgesetzt zu sein, das Verfahren umfassend:
- ein Empfangen einer Anfrage zur Konfiguration der virtualisierten Netzwerkfunktion;
- ein Beziehen mindestens eines Parameters zur Umsetzung einer Elementarkomponente der virtualisierten Netzwerkfunktion in einem virtualisierten Kommunikationsnetzwerk (2), wobei die Elementarkomponente einer virtualisierten Basisnetzwerkfunktion hinzuzufügen ist;
- ein Bilden der virtualisierten Netzwerkfunktion ausgehend von der virtualisierten Basisnetzwerkfunktion und der mindestens einen Elementarkomponente, die ausgehend von dem mindestens einen bezogenen Parameter umgesetzt wird.

9. Verfahren nach Anspruch 8, wobei die Konfigurationsanfrage eine Liste von Elementarkomponenten für die virtualisierte Netzwerkfunktion umfasst.

10. Verfahren nach Anspruch 8, ferner umfassend eine Steuerung einer Kompatibilität einer ersten Elementarkomponente mit mindestens einer zweiten Elementarkomponente, um die virtualisierte Netzwerkfunktion zu bilden, wobei das Bilden nur dann durchgeführt wird, wenn überprüft ist, dass die erste und zweite Elementarkomponente miteinander kompatibel sind.

11. Programm für eine Konfigurationsvorrichtung, umfassend Programmcode-Anweisungen, die dazu bestimmt sind, die Ausführung der Schritte des Verfahrens nach einem der Ansprüche 8 bis 10 zu steuern, wenn das Programm durch eine Konfigurationsvorrichtung ausgeführt wird.

12. Speichermedium, das durch eine Konfigurationsvorrichtung gelesen werden kann, auf dem das Programm nach Anspruch 11 gespeichert ist.

## Claims

1. Device (10) for configuring a virtualized network function, intended to be implemented in a virtualized communication network (2), said device comprising:
- a receiving module (100), arranged to receive a request for configuration of said virtualized network function;
- an obtaining module (102), arranged to obtain at least one parameter for implementation in a virtualized communication network (2) of an elementary component of said virtualized network function, the elementary component being to be added to a basic virtualized network function;
- a configuration module (104), arranged to compose said virtualized network function from the basic virtualized network function and from at least one elementary component implemented based on the at least one obtained parameter.

2. Configuration device according to Claim 1, wherein the configuration request comprises a list of elementary components for said virtualized network function.

3. Device according to Claim 1, further comprising a module (108) for checking compatibility of a first elementary component with at least a second elementary component in order to compose said virtualized network function, said configuration module being activated only when the first and second elementary components are verified as being compatible with one another.

4. Device according to Claim 1, further comprising a sending/receiving module (106), arranged to send, to a generation device, a command for generating said virtualized network function from the virtualized network function composed in a format executable in said virtualized communication network.

5. Device according to Claim 4, further comprising a local database (110), arranged to store a virtualized network function generated by the generation device (30) .

6. System (1) for generating a virtualized network function, comprising:
- a database (20), arranged to store implementation parameters associated with elementary components of virtualized network functions, said parameters relating to an implementation of said components in at least one virtualized communication network (2) ;
- a device (10) for configuring a virtualized network function according to Claims 1 to 5, wherein said obtaining module (102) is arranged to obtain said at least one implementation parameter from said database.

7. System according to Claim 6, further comprising a device (30) for generating a virtualized network function, said generation device comprising:
- an obtaining module (300), arranged to obtain a data model of at least one elementary component of a virtualized network function from said database;
- a sending/receiving module (302), arranged to receive a command for generating said virtualized network function, from a composed virtualized network function, in a format executable in a virtualized communication network (2), and to send, to said configuration device, said generated virtualized network function;
- a computing module (304), arranged to generate said virtualized network function in a format executable in a virtualized communication network (2), from at least one data model of at least one elementary component of said virtualized network function.

8. Method for configuring a virtualized network function, intended to be implemented in a virtualized communication network (2), said method comprising:
- receiving a request for configuring said virtualized network function;
- obtaining at least one parameter for implementation in a virtualized communication network (2) of an elementary component of said virtualized network function, the elementary component being to be added to a basic virtualized network function;
- composing said virtualized network function from the basic virtualized network function and from at least one elementary component implemented based on the at least one obtained parameter.

9. Method according to Claim 8, wherein the configuration request comprises a list of elementary components for said virtualized network function.

10. Method according to Claim 8, further comprising a check for compatibility of a first elementary component with at least a second elementary component in order to compose said virtualized network function, the composition being implemented only when the first and second elementary components are verified as being compatible with one another.

11. Program for a configuration device, comprising program code instructions for commanding the execution of the steps of the method according to one of Claims 8 to 10, when said program is executed by a configuration device.

12. Recording medium that can be read by a configuration device on which the program according to Claim 11 is recorded.
